**Europäisches Patentamt**

(19) **European Patent Office**

**Office européen des brevets**

(11) Publication number: **0 058 029**
**A2**

(12) # EUROPEAN PATENT APPLICATION

(21) Application number: **82300496.5**

(22) Date of filing: **29.01.82**

(51) Int. Cl.³: **G 07 F 7/10**
**G 06 K 19/06**

(30) Priority: **30.01.81 GB 8102800**

(43) Date of publication of application:
**18.08.82 Bulletin 82/33**

(84) Designated Contracting States:
**AT BE CH DE FR GB IT LI LU NL SE**

(71) Applicant: **Halpern, John Wolfgang**
**14 Belsize Park Gardens**
**London, NW3 4LO,(GB)**

(71) Applicant: **Chalmers, David Arthur**
**75 Gordon Road**
**London N3 1ER(GB)**

(71) Applicant: **Ward, William**
**14 Belsize Park Gardens**
**London, NW3 4LO(GB)**

(72) Inventor: **Halpern, John Wolfgang**
**14 Belsize Park Gardens**
**London NW3(GB)**

(74) Representative: **Newstead, Michael John et al,**
**Haseltine Lake & Co. 28 Southampton Buildings**
**Chancery Lane**
**London, WC2A 1AT(GB)**

(54) Portable data carrier incorporating manually presettable processing modes.

(57) A portable pocketsize data carrier, also referred to as pay token, stores more than one bank and/or credit account number in selectably accessable registers. The pay token is equipped with four or five selector buttons for carrying out a large variety of performance modifications. Aided by visual feedback through an integrated display window, the user may using a single button

(a) insert a confidential number into the pay token for internal comparison with a factory-made number which cannot be read out

(b) Select and activate one of 9 account or similar registers

(c) Define a small cash amount in single figures currency units or a multiple thereof which the user desires to transfer from a selected token account to an uncommitted register, the rapid payment register or money register. The latter is electronically so connected that entry of the Personal Identifying Number is not required prior to payment from that register- as is required when payment is made from any of the account registers directly.

The purpose of producing a long-life multiple account

pay token is gradually to reduce the demand of coins and bank notes thereby lowering the high cost of minting and printing them; in parallel thereto the relatively high cost of operating cheque accounts by Banks shall be reduced.

*Fig. 4*

# Portable Data Carrier incorporating manually presettable 0058029 processing modes

This invention relates to improvements in portable self-contained data carrying components which can be used for bi-directional communication via an associable data terminal with a calculator or location encoder terminal, and which data carrier is capable of performing at least a portion of the required data processing function within its own miniaturized circuitry.

The present paper is a continuation of the authors' earlier work as manifested in British Patent 1,314021, B.P Applications 7931208 7911393, 8010709, US Patents 3,870,866 and 3,906460 to some of which reference will have to be made in the course of the detail description. Also other attempts have become known to create personal information bearer; it is noteworthy that the general trend is restricted to the aim of making already existing bank cards more secure and of obliging the general public to observe the constraints placed upon their proper use. To this comes the additional aim of avoiding on-line contact from the bank-or point of sale terminal with a central computer installation because of the considerable cost of dedicated data lines.

The object of this invention includes but is not limited to the named improvements; not the replacement of one bank card by another is the m a i n objective but the replacement of money in a large number of situations where this implies inconvenience as well as administrative inefficiency, often rightout harmful or costly bottlenecks in the delivery of services and facilities. The purpose of this invention is therefore the creation of devices which, on the one hand, can be handled as conveniently and rapidly as a coin in the pocket, on the other hand become a link at the disposal of the individual in a network of electronic fund transfer communication lines.

While thus the field of 'small cash transaction' is in the foreground, the technique to be developed must also fully meet the requirements of a bank card for medium and even large purchases. The comprehensiveness of these objectives brings problems since it is wellknown in the art that a valuable card can be protected against misuse by finders in the event of loss/by certain preparatory action required to be performed by the card user before the card functions. This is the keying in of a secret personal number which is checked against the true record of that number in the card itself.

Such a process takes time, there may be more people in a queue using the same terminal. Someone wishing to pay, say, 47 p in coins would resent having to spend any time whatever on dialling a personal number. Speed and Security appear thus as contradicting requirements. One of the purposes of this invention is to overcome this matter. Another problem is that many people have several accounts which they use dependent on circumstances. In some cases  Giro is best, in others one of the large Clearing Banks, in still others a local Bank, and, where cash flow suggests a credit card account is often used. All these accounts should benefit from electronic fund transfer technology  but it would be too expensive to produce a separate 'electronic coin'  for each of them. This leads to the concept of a"multi-mode electronic fund transfer p u r s e". Just as a purse has several compartments meant for coinage, bank notes, credit cards and cheques, so the proposed on-person pay device would be adaptable to give out or receive value data at one time from/a selected into bank account, at another time from/into a credit account, and for all rapid small cash transactions from a money store. In addition, the device should perform checking and calculating duties in situations where small cash payments  . are frequent such as in supermarkets, in the use of taxis and public transport, and in many access control requirements where payment for access, or the time lapse of the period within the paid area,also occurs ( See for example Br. P. 857,658  or US Patent 3,609,300 and US Patent 3,870,866 ).Paralell with the described requirements goes the need to be able to call forth on a display window, preferably away from any terminal, the status in any of the memory sections. In its general form, new solutions are offered and described in the copending British patent application Ser. No.  8028824  . The techniques hereunder described constitute special embodiments which, among others, illustrate the possibility of producing a very compact personal data carrier such as could be carried about on a key ring together with standard Yale or similar keys.

The explanation of the invention principles is aided by examples which are illustrated in drawings 1 - 9  wherein

Figure 1A and 1B combined represent a diagram of a portion of the integrated circuitry in the data carrying component

Figure 2 and 3 are views of a particular realisation of the data carrying component

Figures 4 and 5 are views of a very simimilar data carrying component after incorporation of a display window and manual controls

Figure 6 shows the electrical structure of the integrated circuitry capable of not merely fulfilling the functions associated with the manual selection buttons on the device but, a l l the functions of the component including for example those des – cribed in detail in our Patent Applications 8004546 or 8028824.

Figure 7 shows an alternative layout of a mode-controllable data token

Figures 8 and 9 show an example of a Read/Write data transfer terminal intended for rapid presentation , especially in access and revenue control situations and at turnstile controlled passage points.

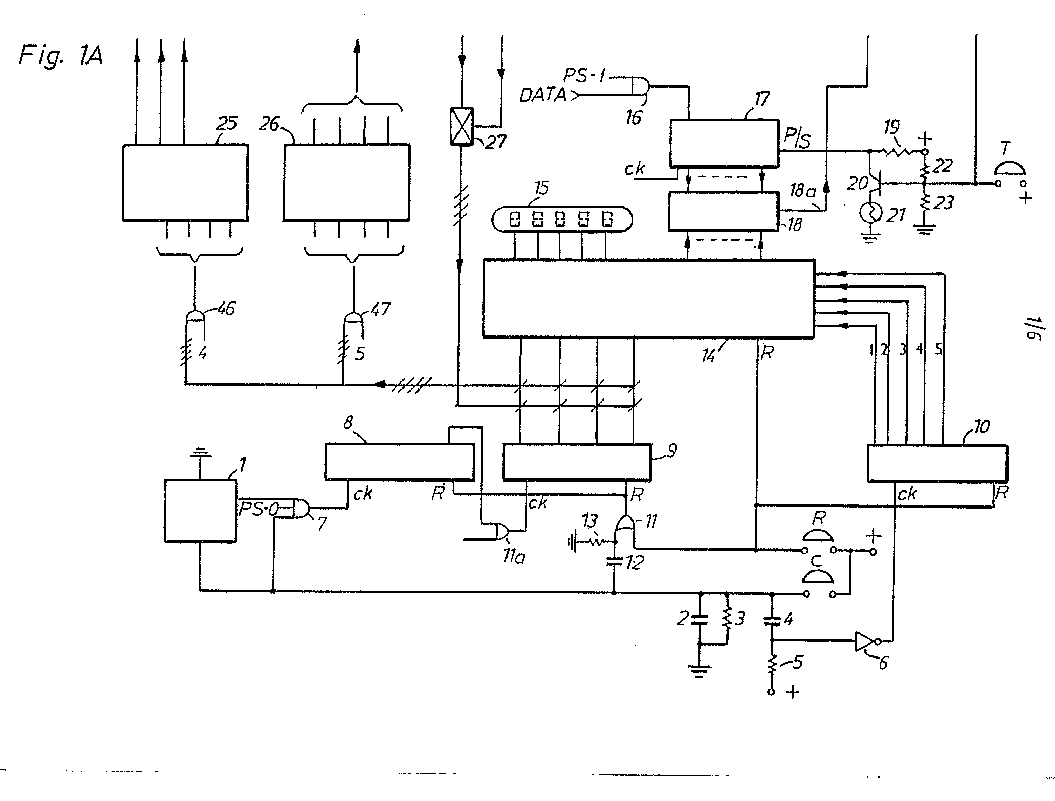

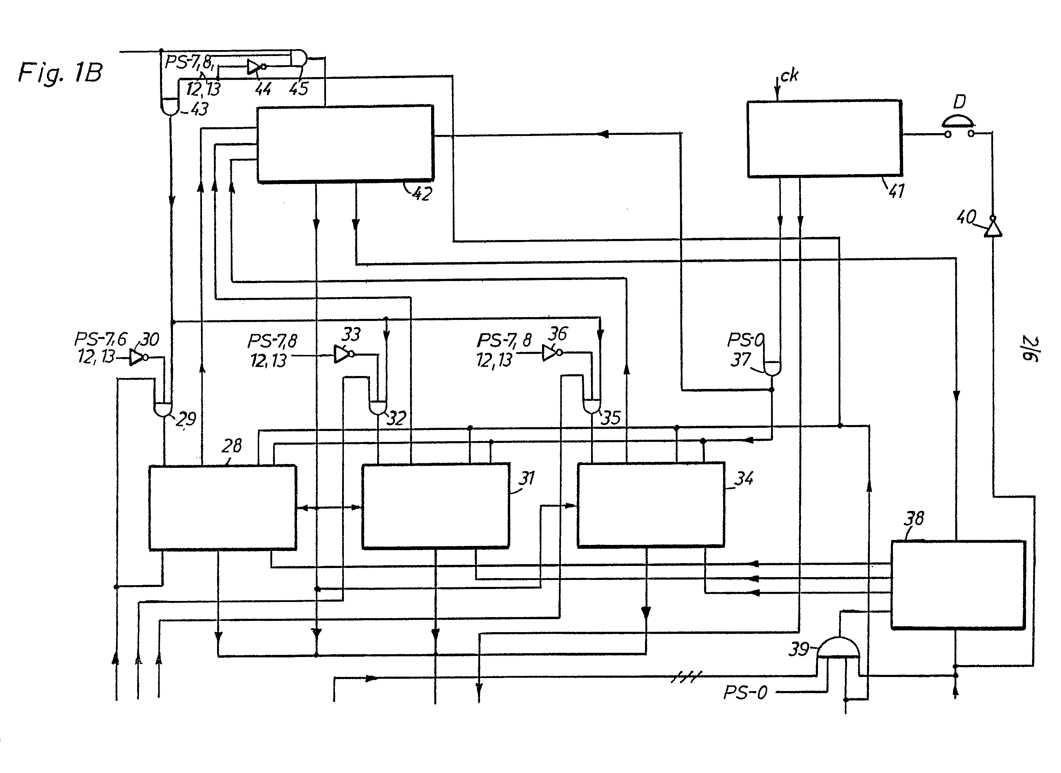

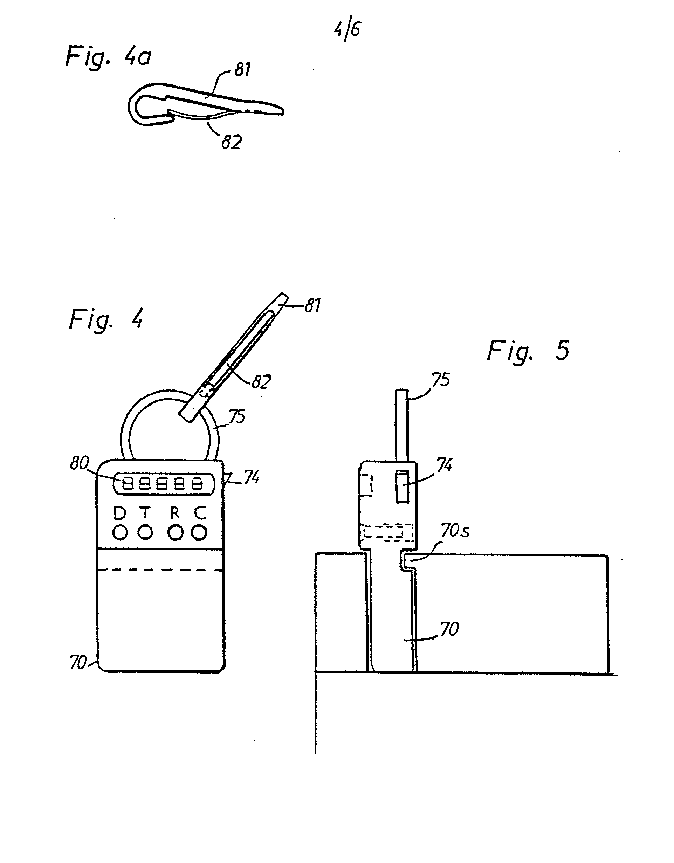

The display window shown in Figure 4,item 80, can also be seen in the diagram Figure 1A,item 15; equally, the push buttons C,R,T and D can be seen in the said diagram, figures 1A,1B.

The function of the control button R is to reset all temporary stores.

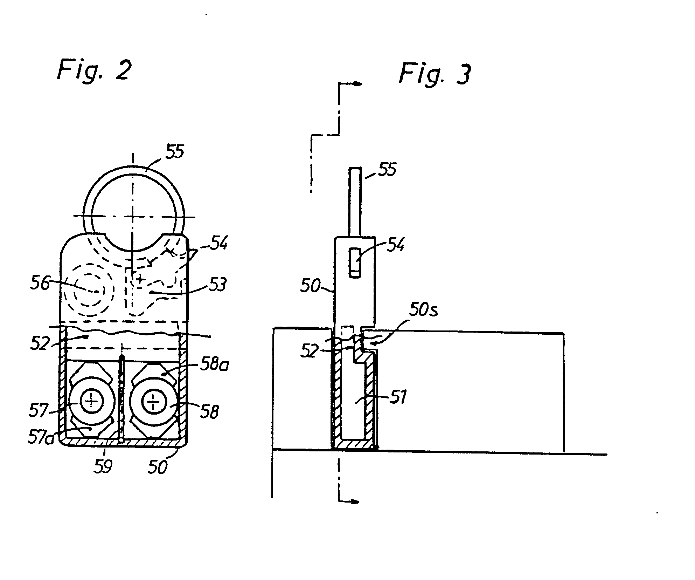

By depressing button C the Oscillator 1 receives operating voltage from the battery which is encapsulated in the component(Figs 2 or 4).

In consequence 80 c/s pulses pass through gate 7 which can only work when the device is in its PS – 0 condition ( program step 0, see patent appl. 8028824 ). Applied to a divide by 64 counter the output provides for one clock pulse every $\frac{3}{4}$ seconds which passes through OR gate 11a to a BCD counter 9 which applies the 4-line output to an 4-7 encoder 14. The ripple counter 10 has five output lines which act as enable inputs to the 5 latchable 4 to 7 encoder circuits within block 14.These in turn drive five display digits in unit 15. Initially,only the first digit on the left is enabled through ripple counter output'1'. As button 'C' is depressed the first digit on the left counts successively from 1 to 9 at $\frac{3}{4}$ seconds interval and goes on counting that way as long as button C remains depressed. The user has the task to insert into the first three left-hand figures a 3-digit number known only to him. This number is then to be compared in a comparator 18 with a number permanently recorded/in a 12 bit shift register 17. Dependent on whether the comparator output 18a is forthcoming or not, any subsequent operation is either permitted or not. – The personal data are inserted into the shift register 17 by the issuing office when the data token is first acquired. In that initial condition the register is in its serial mode due to the fact that the fuse-resistor 21 is still conductive. After the insertion of the number during program step PS - 1 ( reference BPA 8028824), the register is still in the serial mode and to put it once for all into the paralell data input mode the pushbutton T must be pressed. This renders the transistor 20 highly conductive so that the relatively high current burns out the resistor element 21.

The method of producing three personal number digits is to release button C as soon as the desired first digit appears. This causes oscillator 1 to stop, at the same time the ripple counter 10 receives a single clock pulse generated in the resistor-capacitor combination 4,5. Accordingly, the next digit is enabled and when button C is depressed again the count begins there while the first digit remains latched. And so on until all the three personal numbers are in place. This insertion of the secret personal 'Enable' number can be carried out in complete privacy, and therefore constitutes an improvement on the present practice of having to use a public terminal. In this system the private identification number is actually compared with the number in register 17 only after the data token is used for any functional purpose. Prior to that, any error can be corrected by cancelling the display by means of reset button R and repeating the process. Once the token proceeds to a functional stage the error cannot be undone; only a limited number of such errors are permitted before the data token is irreversibly disabled ( see US patent 3,906 460 ).This is achieved by providing in the circuitry (here not shown) a so-called fraud counter. The same is advanced every time a faulty comparison occurs and, at a given or preset point, the register causes the named irreversible action.

Once the PIN number is inserted, the user may carry it about ( the display would be cut out by an internal time switch after about 6 seconds ) until the occasion for use arises. In that case, any payment would be made from a previously set account store. However, if payment should be made from another account store, this must be preset as well, and that is done in the following manner:

Having inserted the PIN number the user proceeds by inserting a figure into the fourth digit in the same way as already discribed. The fourth digit is a reference number referring to one of several account stores present in the data token circuitry. Each of these account stores corresponds to a value register as described in patent appl. 8028824, item C3 in Figure 1B. In the pay context these stores hold amounts of money and each store may be associated with a particular bank account of the owner. However, some stores may be used for memory aids as desired by the user, or they may include
cumulative items of interest to the user ( sum of all expenditures , etc ).
Each of these memory items can be recalled selectively by mean of button
C alone and caused to be displayed by pressing button D.
In Figure 1 B only four stores are shown namely store "1" containing
a bank account ( as loaded by that bank) ,store "2", another bank account
(as loaded by another bank), store "3" , a credit card account containing
a credit maximum minus all usage of that credit, and store "4" called a
'money store'. The latter is an uncommitted store that is to say the same
may accept small money values from any of the account stores in use.
The circuitry makes it possible to transfer a selected money value in round
£ together with the appropriate account number, issuing branch and issuing
date from any particular account store 28 or 31 or 34 into the memory of
circuit 42. The user when wishing to pay for a certain item has the choice
to make payment from a n y of the named value stores. The difference between the money store and the account stores in this respect is only that
the money store is instantly usable; the account stores as explained, to be
enabled require the P.I number to be inserted first prior to each transaction.
This ensures of course that major amounts cannot be transferred from a
stolen data token.This condition is n o t attached to the money store
because therein only a cash allowance sufficient for the day's small cash trans-
actions can be stored, and in the event of loss of the device the damage
would be minor. It should be noted, however, that also in the case of 'money'
or small cash payments made from the money store, the full details of the
souce ( bank account, bank branch, bank number etc.)would be transferred
to the point of sale terminal together with the actual amount paid. These
data would then be put into the data stream in nightly transmissions to
the various originating bank branches and no distinction is made between
large or small amounts. It is thus clear that a person may readily ride
a bus by using his or her token credit account. This possibility will enhance the very popular use of 'credit cards' for travel purposes. After the
selection of the account by means of button C, the purpose of the fifth digit is to selected the £ value to be transferred to the socalled 'money store'.
After all the five digits are set, the user pushes the T button which actuates the transfer control module 38 (Fig 1B) which controls all the internal
transfer functions. These also imply that any remnant value in the money
store together with the requisite bank account data are emptied therefrom
and returned to the appropriate account store while new data are being inserted.

The count-down debiting pulses are applied to any of the selected stores in program step _8_ ( see pat specification BP 8028824). External readout occurs in PS-7 whereas in PS-12 value data are added to the status of a selected account and in PS-12 the result is externally read out ( see the named British application ). 'Count down' is identical with reducing the value data level by the amount preset by the external point of sale terminal. Overstepping the allowed credit is not possible since the readout in PS-7 establishes at once whether there is anough value in the account concerned.

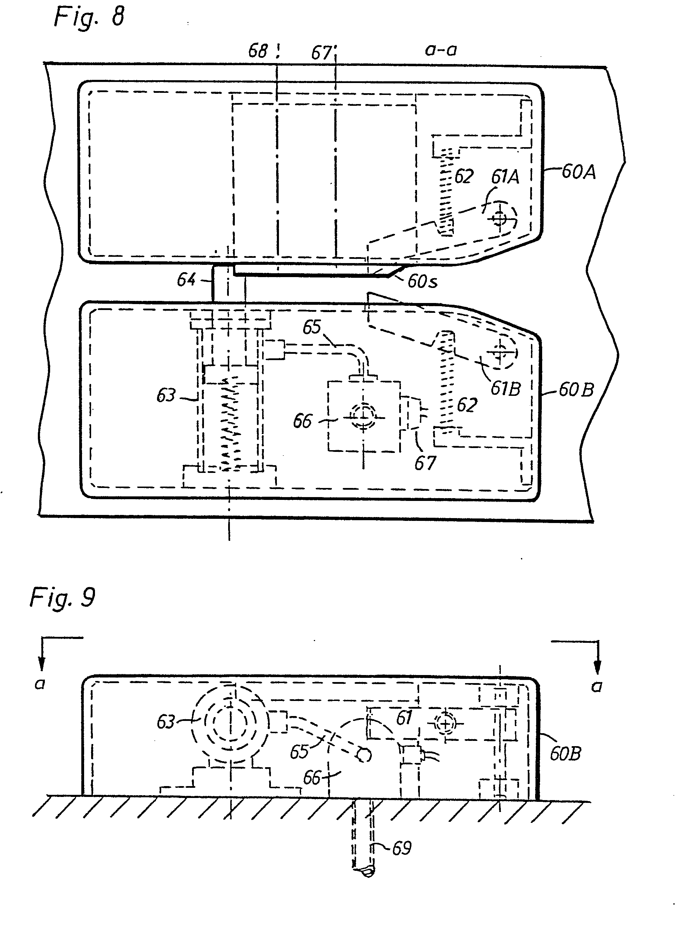

Next the simple data carrying component capable of holding only one account memory will be explained by means of _figures 2 and 3_. A plastic container 50 comprises a hollow space 51 for placing therein ferric yokes and cores 57a and 58a with their coils 57 and 58 respectively. One of these serves the injection of clock pulses and energy,the other sends and receives the bidirectional data stream. Another internal space is 53 wherein a trigger level 54 is hinged and spring-loaded against an opening in key ring 53.By pressing lever 54 downwards the ring is unlatched and can now turn in either direction,permitting keys to be changed. Finally,there is a spare-out space for a long-life rechargable battery 56 which is used for maintaining memory states in the encapsulated circuitry. The read/write unit with which this data carrier cooperates will be described by means of fig. 8 & 9 further below. In the area 52,Fig.2,space exists for the I C chips and subsidery items. _Figure 4 and 5_ show essentially the same unit equipped with a display 80 and the already discussed buttons C R T D. Both the afore-described simple and the multi-mode pay tablet may be used in the  s a m e data transfer terminal of fig. 8. As can be seen in Fig. 5, the pushbuttons are recessed but can be actuated by means of a pencil or the like. To assure readiness at all times to operate the buttons, the key ring 75 may hold a pin 81 having a displaceable spring 82. The pin can be taken off easily for the intended use and be just as easily put back on the key ring.( Fig. 4a ).

While the circuit of Fig. 1A and 1B could be added to the circuitry for example as envisaged in patent applications  7931208 or 8004546 or 8028824 which are devoted to the data processing of the data tablet at a point of sale terminal, it is probably more economic to design a single dedicated data processing chip capable of performing all the functions.

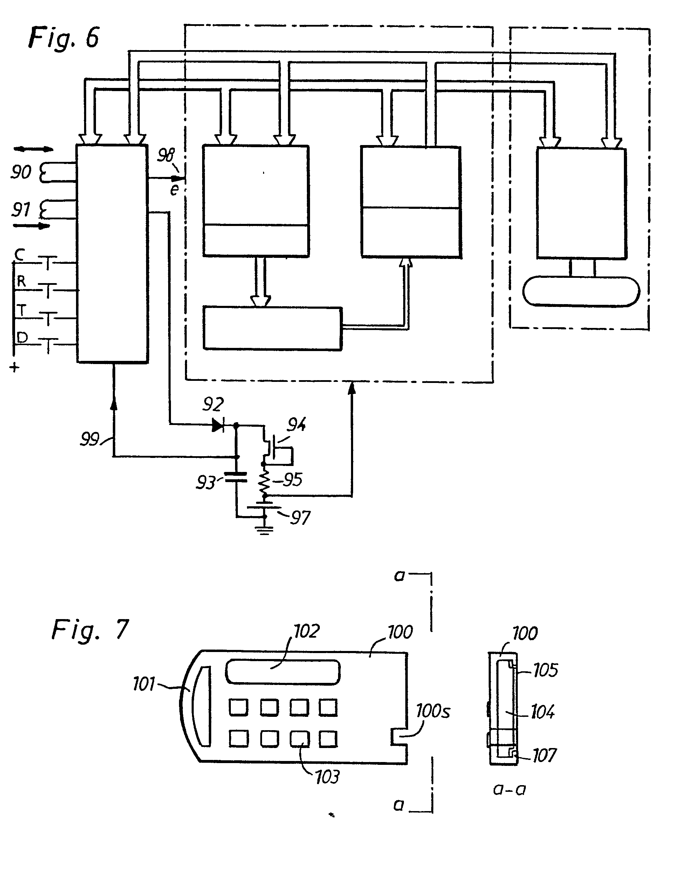

The principle of this concept is represented in the functional diagram Fig. 6 which is largely self-explanatory. According to the security principles explained in the cited patent application at least two number comparisons are performed for each point of sale transaction, and at least four such comparisons when the data tablet is updated with added value. A similar comparison is required for verification of the personal identity number. It is therefore possible to unify all 'word recognition' operations More such comparisons occur when remnant money value is to be returned to the originating account within the data tablet. It is therefore desirable to unite all 'word recognition operations. Similar contractions might be made with respect to the basic processor program as also the internal data transfer and display functions. - Current batteries can stand only a definite maximum charging current. To ensure that this current is not exceeded when energy is transferred from a terminal, the capacitor 93 is provided which rapidly accepts a charge at a higher voltage.The discharge of the capacitor then occurs via field effect transitor 94 into battry 97. @)

Figure 7 represents an alternative configuration of · a data carrier. It consists of a steel frame 100. On its upper face are inserted the push buttons 103 and the display window 102. A handle 101 allows insertion of a standard key ring. On the rearside the flanges show lips 107. The interior containes potted circuitry and, to the right of the buttons, _ equally potted/are data and energy transfer coils. The interior plastic part is item 104. A paper card containing information useful when the item is lost , may be placed between lips 107. This item is marked 105.

Finally, an example for checking the data tablet rapidly is shown in Figs 8 and 9. The tablet is introduced by sliding it upright along the smooth table surface 68 between sections 60A and 60B from right to left. When reaching key section 60s, the same will dovetail with the corresponding recess portions 50s (Fig.2) or 70s (Fig. 4)respectively. Just before the moved data tablet is stopped by stopping rod 64, the spring loaded latch levers 61A and 61B snap inwards and so confine the data tablet to the precise area where it should be as long as the data transfer lasts.This period lasts a fraction of a second whereafter the stopping rod 64 is withdrawn rapidly allowing the tablet to be moved out in a forward direction.

@) The feedback line is important in the context since it senses the voltage level of the capacitor 93 and causes all clock data to be disabled until line 98 at imput e goes high. This ensures that the starting voltage level is sufficient.

The piston 64 is in this example part of a pneumatic actuator 63 with the pneumatic supply tube 65 and the electro-pneumatic valve 66 which receives its supply through pipe 69.

The electrical information transfer occurs inductively by means of sensor coils ( not shown ) whose axis are indicated by center lines 67 and 68 which , in the read/write position, are congruent with the center lines of the coils 57 and 58 of Figure 2.

Claims

1. A portable data carrying component  and associable data transfer
   device, the said component incorporating at least one miniaturized
   circuit having several memory sections  and means for transferring
   data between the component and the transfer device as well as manual
   setting means on the surface of the component to preset program elements in the miniaturized circuit and a display window for displaying
   data in humanly readable form, the improvement consisting
   in the provision of a first single button for placing an n- digit
   decimal number into a first variable memory section of the miniaturized circuit and circuit means for enabling an operator to carry
   this out  when receiving visual feedback from the display window.

2. A portable data carrying component and associable data transfer device as in claim 1 wherein said electronic circuit also comprises at
   least one committed memory section for holding an n digit decimal
   number which cannot be read out externally and represents a secret
   personal number to be known only to the owner of the device, and a
   comparator circuit for comparing said n-digit number with said other
   n- digit number generated by means of said first single button manually and placed into said first variable memory section, for producing a comparator output signal if the two numbers are equal.

3. A portable data carrying component and associable data transfer device as in claim 1  in which.
              the said miniaturized circuit contains also m storage registers in a second variable-memory section containing variable informational data  and wherein the said first single button can also
   be used for manually selecting access  to one of the m storage re-
   gisters of said second variable-memory section.

4. A portable data carrying component and associable data transfer device as in claims 1,2 and 3 wherein the selection of a storage register in the said second variable-memory section by the first single
   button is co-dependent on the presence of a comparator output signal
   having been generated by the said comparator.

5. A portable data carrying component and associable data transfer device as in Claim 4   wherein a 2nd button (D) is provided on the surface of the said component which on being depressed renders the contents of the storage register selected by means of said first single
button to become visible on the display screen within said display window.

6. A portable data carrying component and associable data transfer device
as characterized in claims 3 and 4   wherein besides the m storage registers of the said second variable-memory section of the miniaturized
circuit   there is also at least one third memory section which is ac -
cessable via the data transfer unit from outside or for display via
said second button   w i t h o u t   requiring said comparator out -
put signal   as defined in claims 2 and 4, that is, without prior verification of a keyed-in secret personal number.

7. A portable data carrying component and associable data transfer de -
vice, the said component incorporating at least one miniaturized
circuit having several memory sections and means for transferring
data betwen; the component and the transfer device as well as manual
setting means on the surface of the component to preset program elements in the miniaturized circuit and a display window for displaying
data in humanly readable form, the improvement consisting in the provision of a first single button for placing into first,second and
third memory sections of said circuit, in consecutive order and concurrently displaying in said display window :

      (a) a number comprising n decimal digits

      (b) a number representing a selected one of m storage registers and     (c) a number representing a value indicator for a money value
           to be internally transferred from a storage register of the
           second memory section to a third memory section of said circuit.

8. A portable data carrying component and associable data transfer
device,   the component further signified by the provision of a
data transfer control circuit for programming and executing the
internal transfer of data between said second and said third section,
and of a third button (T) on the surface of the component for
enabling the functions of said transfer circuit.

9) A portable data carrying component and an associable data transfer device as in Claim 8 , the further feature of the said transfer control circuit being that in its program is included the recirculation and return of data, if any, contained in the third memory section of said miniaturized circuit to the appropriate storage register of the second memory section from which they originally derived so that the transfer of new value data from a newly selected storage register into/,/ an empty third memory section can take place.

10) A portable data carrying component and an associable data transfer system as in claims 1 - 7 wherein the means for transferring data from any of the said storage registers or memory sections to an external buffer memory and computer system are reactive coupling means.

11) A portable data carrying component and associable data transfer system including
at least one miniaturized circuit and means for transferring data between said component and said system, manual setting means to preset some of the programming portions in the said miniaturized circuit and a display window built into said data carrying component characterized in that both the external and internal communication-, security-, and executive functions as set out in this and the cited documents are carried out by a unified circuit comprising an input/output conversion circuit ( I/O), an information holding or memory circuit, a word recognition or comparator circuit, a data processor and control circuit, and a display module circuit whereby several of these may be combined in a single integrated circuit area.

12) A portable data carrying component and associable data transfer system      as in claim 10 wherein said component contains a rechargable battery in an encapsulated condition and wherein the said input / output circuit is connected to a reactive coupling member which constitutes a part of the said component through which it receives induced alternating electric energy, means for rectifying and temporarily storing said energy in d.c. form, means in the

I/O circuit to compare the instantaneous built-up of the induced
d.c. energy level with a stipulated minimum voltage level, and further
means to keep the remaining electric circuitry disabled until the
induced d.c. voltage exceeds said minimum.

13) A portable data carrying component and associable data transfer
system as in claim 12 wherein the said means for temporarily storing
the induced energy are series connected with a constant current resistor element and said rechargable battery, in such a manner as to pass
the maximum permissble charging current through the battery.

14) A portable data carrying component and associable data transfer
system, the component being characterized in that it includes in combination ferric-core loaded coils, CMOS-or other low current ICs, and
a Liquid Crystal display panel, conjointly an arrangement in its outer
shell for accepting a standard key ring.

15) A portable data carrying component and associable data transfer
system/wherein the said arrangement is designed in accordance with
as in claim 14
Swiss Patent 597779.

16) A portable data carrying component and associable data transfer
device, as in claim 14 wherein the component has a single manually
actuable button by means of which verification of an n decimal digit
individualized number can be performed.

17)                      as in claim 16 wherein the same said button
is also used for selecting one of several account stores in which
value data are held and for enabling such a selected store to be debited in a point of sales data transfer terminal whenever presented
to it via a said transfer data device.

18)                      as in claim 14 wherein the display has 5 digits
of which the first three on the left are personal identification digits,
the fourth one signifies one of the storage registers, and the fifth
digit signifies a value data relating to the value to be transferred
from an account to an uncommitted store.

(19)  A portable data carrying component and associable data transfer device as in claims 1 - 18, wherein the data carrying component has a groove transversally placed acrosss its smaller dimension to serve as a retaining element when placed into the associable data transfer device

(20)  A portable data carrying component and associable data transfer device, said transfer device consisting of a sliding track on which can be moved a data carrying component, on one side of said sliding track being placed a device containing electro-magnetic coils whose center to center spacing is identical with that of the coils in the data carrying component, and on the other side of said sliding track ~~prxintegralxxxithxsaidxx~~ a second device containing a movable stop bar extending  into the path of said track, and means for rapidly extracting              said bar in response to an electric signal from the data transfer system.

(21)  . . . . .              as in claims (19) and (20) , the said device on one side of the said sliding track being provided with a key-shaped protrusion which dovetails with the groove in the data carrying component when the latter is pushed into the transfer device.

1/6

Fig. 1A

Fig. 1B

PS-7,8  
12,13  
44  45  
43

ck

D

42

41

40

PS-7,6  30  
12,13

PS-7,8  33  
12,13

PS-7,8  36  
12,13

PS-0  
37

29

32

35

28

31

34

38

39

PS-0

2/6

0058029

Fig. 2

Fig. 3

Fig. 4a

81

82

Fig. 4

81

82

75

80

D T R C

74

70

Fig. 5

75

74

70s

70

Fig. 6

Fig. 7

*Fig. 8*

*Fig. 9*